(19) Europäisches Patentamt
European Patent Office
Office européen des brevets

(11) **EP 2 251 534 B1**

(12) **EUROPÄISCHE PATENTSCHRIFT**

(45) Veröffentlichungstag und Bekanntmachung des Hinweises auf die Patenterteilung:
**18.07.2012 Patentblatt 2012/29**

(51) Int Cl.:
*F02C 3/22* (2006.01)    *F02C 7/22* (2006.01)
*F02C 9/26* (2006.01)

(21) Anmeldenummer: **10161840.3**

(22) Anmeldetag: **04.05.2010**

(54) **Verfahren zum Betrieb einer Gasturbinenanlage mit einer Verdichterstation für gasförmigen Brennstoff**

Method of operating a gas turbine which uses a compressor station for gaseous fuel

Procédé de fonctionnement d'une turbine à gaz utilisant un compresseur de carburant gazeux

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **13.05.2009 CH 7462009**

(43) Veröffentlichungstag der Anmeldung:
**17.11.2010 Patentblatt 2010/46**

(73) Patentinhaber: **Alstom Technology Ltd**
**5400 Baden (CH)**

(72) Erfinder:
• **Liedtke, Klaus-Dieter**
**CH-5304, Endingen (CH)**
• **Zhang, Mengbin**
**CH-8048, Zürich (CH)**
• **Schirmeister, Ulf**
**CH-5304, Endingen (CH)**
• **Kirecci, Aysegul**
**CH-5400, Baden (CH)**

(56) Entgegenhaltungen:
**EP-A- 0 661 426     EP-A- 1 134 422**
**EP-A- 1 635 066     DE-A1-102007 007 888**

**Beschreibung**

TECHNISCHES GEBIET

Die vorliegende Erfindung bezieht sich auf das Gebiet der Gasturbinentechnik. Sie betrifft ein Verfahren zum Betrieb einer Gasturbinenanlage gemäss dem Oberbegriff des Anspruchs 1.

STAND DER TECHNIK

Eine Verdichterstation einer Gasturbinenanlage für die Verdichtung eines Brenngases, die mit einem Bypass-System ausgerüstet ist, ist in der Lage, die Gasturbine über das Bypass-System an dem Verdichter vorbei mit dem Brenngas zu versorgen. In einem solchen Fall kann der Verdichter abgeschaltet und so der Energieverbrauch der Verdichterstation deutlich reduziert werden.

Bisher wurde ein solcher Bypassbetrieb eingeleitet, wenn der Versorgungsdruck des Brenngases höher war, als ein vorgegebener notwendiger Minimaldruck, der auf der Basis der Grundlast der Gasturbine und unter Annahme der ungünstigsten Randbedingungen im Umfeld der Gasturbine berechnet worden war. Aufgrund dieser starren Vorgaben war es bisher nicht möglich, das volle Einsparpotential durch einen Bypassbetrieb in der Verdichterstation auszuschöpfen.

Der Druckschrift DE 10 2007 007888 A1 ist ein System und ein Verfahren zum Verringern des Druckbedarfs der Brenngaszufuhr einer Gasturbine bekannt, die zu einem vergrösserten Betriebsbereich und zu einer Verringerung von Auslösungen der Gasturbine führen. Hierbei wird zur Bestimmung eines Brenngasbezugsdrucks zur Zufuhr von einem Drucksteuerventil zu einem Gassteuerventil von mehreren Brenngasdüsen in einer Gasturbinenbrennkammer ein erster erforderlicher Brenngasdruck stromaufwärts von den Brenngasdüsen bestimmt. Weiterhin wird ein minimal zulässiger Druckbedarf stromaufwärts von dem das Steuerventil in Abhängigkeit von dem ersten erforderlichen Brennglasdruck bestimmt; und schliesslich wird der Brenngasbezugsdruck zum Steuern des Drucksteuerventils in Abhängigkeit von dem minimal zulässigen Druck bedarf bestimmt. Bypässe sind dabei nicht vorgesehen.

Aus der Druckschrift EP 1 635 066 A2 sind eine mit einem Kompressor ausgestattete Gasversorgungsanlage und ein zugehöriges Betriebsverfahren für eine Gasturbine bekannt, bei welchem der Energieverbrauch des Kompressors dadurch reduziert wird, dass der Kompressoraustrittsolldruck in Abhängigkeit eines Verbrauchereintrittsolldrucks ermittelt wird. Hierbei wird der Betrieb des Kompressors selbst unter Zuhilfenahme mehrerer Bypässe geregelt.

DARSTELLUNG DER ERFINDUNG

Es ist daher Aufgabe der Erfindung, ein Verfahren zum Betrieb einer Gasturbinenanlage mit vorgelagerter Verdichterstation für die Verdichtung eines gasförmigen Brennstoffes und einem innerhalb der Verdichterstation angeordneten Bypass-System anzugeben, mit dem die durch einen Bypassbetrieb erreichbare Energieeinsparung optimiert werden kann und gleichzeitig ein stabiler Betrieb der Gasturbine ohne Leistungsänderung bei Eintritt des Bypassbetriebs gewährleistet ist.

Die Aufgabe wird durch die Gesamtheit der Merkmale der Ansprüche 1 und 6 gelöst. Wichtig für die erfindungsgemässe Lösung ist, dass fortlaufend der Brenngasdruck am Ausgang des wenigstens einen Steuerventils gemessen wird, dass aus den gemessenen Druckwerten jeweils ein für den Betrieb der Gasturbine notwendiger minimaler Brenngasdruck am Eingang des wenigstens einen Steuerventils bestimmt wird, und dass die Verdichterstation auf den Bypassbetrieb umgeschaltet wird, wenn der über das Bypass-System auf den Eingang des wenigstens einen Steuerventils gelangende Brenngasdruck grösser oder gleich dem notwendigen minimalen Brenngasdruck ist. Hierdurch kann der Betrieb des Verdichters wesentlich genauer und damit energiesparender gesteuert werden als bisher.

Eine Ausgestaltung des erfindungsgemässen Verfahrens zeichnet sich dadurch aus, dass der Verdichter das Brenngas zu mehreren parallel liegenden Steuerventilen leitet, dass fortlaufend der Brenngasdruck am Ausgang jedes der Steuerventile gemessen wird, dass aus den gemessenen Druckwerten für jedes der Steuerventile jeweils ein für den Betrieb der Gasturbine notwendiger minimaler Brenngasdruck am Eingang des entsprechenden Steuerventils bestimmt wird, und dass die Verdichterstation auf den Bypassbetrieb umgeschaltet wird, wenn der über das Bypass-System auf die Eingänge der Steuerventile gelangende Brenngasdruck grösser oder gleich dem Maximum der notwendigen minimalen Brenngasdrücke aller Steuerventile ist.

Gemäss einer anderen Ausgestaltung der Erfindung wird der für den Betrieb der Gasturbine notwendige minimale Brenngasdruck jeweils durch Multiplikation des Brenngasdrucks am Ausgang des wenigstens einen Steuerventils mit einem Faktor bestimmt.

Der Faktor ist vorzugsweise durch das konstante Verhältnis von minimalem Druckabfall über dem Steuerventil zum Brenngasdruck am Eingang des Steuerventils bestimmt.

Eine weitere Ausgestaltung der Erfindung ist dadurch gekennzeichnet, dass anstelle des Brenngasdrucks am Ausgang des wenigstens einen Steuerventils die Differenz aus dem Brenngasdruck am Eingang des Steuerventils und dem Druckabfall am Steuerventil verwendet wird.

Eine andere Ausgestaltung der Erfindung zeichnet sich dadurch aus, dass zur Bestimmung des auf den Eingang des wenigstens einen Steuerventils gelangenden Brenngasdrucks die Differenz aus dem Versorgungsdruck am Eingang der Verdichterstation und dem Druckabfall zwischen dem Eingang und dem Bypass-System herangezogen wird.

KURZE ERLÄUTERUNG DER FIGUREN

Die Erfindung soll nachfolgend anhand von Ausführungsbeispielen im Zusammenhang mit der Zeichnung näher erläutert werden. Es zeigen

Fig. 1 ein stark vereinfachtes Schema einer Gasturbinenanlage mit Verdichterstation für einen gasförmigen Brennstoff, wie sie für die vorliegende Erfindung geeignet ist und

Fig. 2 das Schema einer Verdichterstation mit Bypass-System, die zur Durchführung des Verfahrens nach der Erfindung dient.

WEGE ZUR AUSFÜHRUNG DER ERFINDUNG

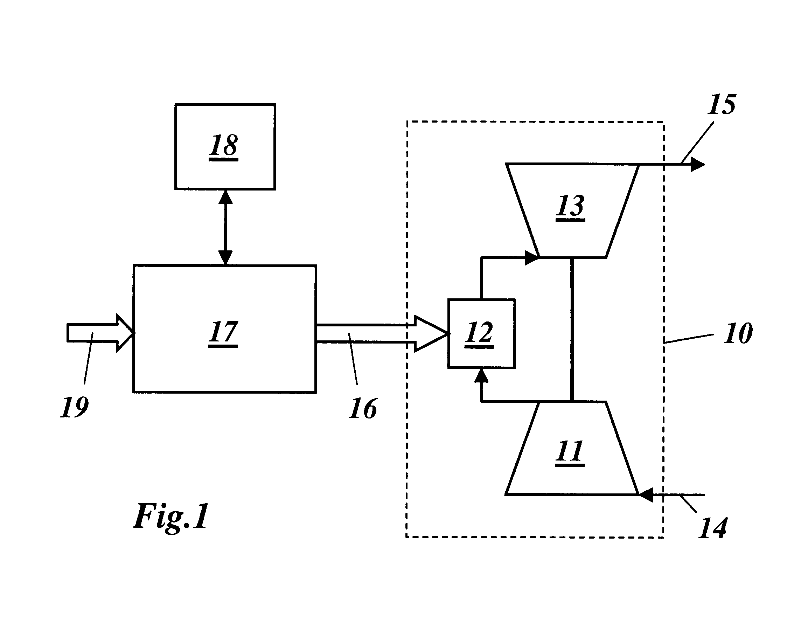

In Fig. 1 ist ein stark vereinfachtes Schema einer Gasturbinenanlage mit Verdichterstation für einen gasförmigen Brennstoff wiedergegeben. Die Gasturbinenanlage 10 umfasst einen Verdichter 11, der über einen Lufteinlass 14 Luft ansaugt und verdichtet und die verdichtete Luft an eine Brennkammer 12 abgibt, wo sie zur Verbrennung eines gasförmigen Brennstoffes oder Brenngases verwendet wird, der bzw. das über eine Brennstoffzufuhr 16 in die Brennkammer 12 gelangt. Die entstehenden heissen Verbrennungsgase werden in einer nachfolgenden Turbine 13 unter Arbeitsleistung entspannt, um beispielsweise einen (nicht gezeigten) Generator anzutreiben. Die über den Abgasauslass 15 abgegebenen Abgase können entweder direkt an die Umwelt abgegeben werden oder mittels eines Abhitzedampferzeugers Dampf für die Dampfturbinen eines Kombiprozesses erzeugen.

Für den Verbrennungsprozess in der Brennkammer 12 ist ein gewisser Mindestdruck des eingespeisten Brenngases nötig, der, wenn der Versorgungsdruck nicht ausreicht, mit Hilfe einer vorgeschalteten Verdichterstation 17 aufgebaut werden muss, die das über die Gaszufuhr 19 zugeführte Brenngas verdichtet. Schwankt der Versorgungsdruck zwischen für die Brennkammer 12 ausreichenden und nicht ausreichenden Werten, kann der Verdichter in der Verdichterstation im ersteren Fall abgeschaltet und durch ein Bypass-System umgangen werden, um die für den Verdichter benötigte Energie zumindest zeitweise einzusparen. Für das Umschalten zwischen Bypassbetrieb und normalem Betrieb mit Verdichtung ist eine Steuerung 18 zuständig, die gemäss den nachfolgend erläuterten Kriterien den Betrieb der Verdichterstation 17 steuert.

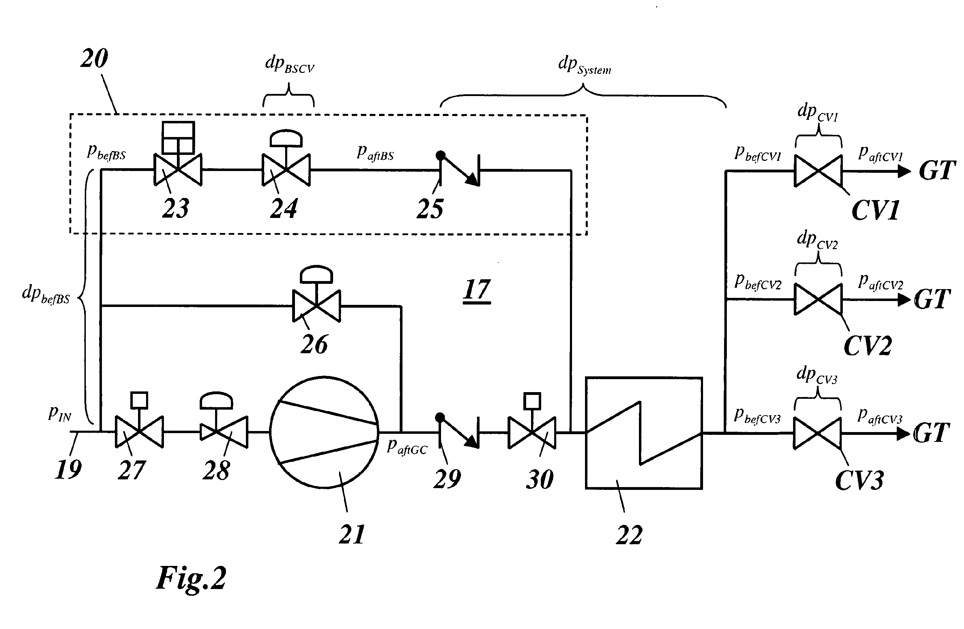

Fig. 2 zeigt ein vereinfachtes Schema der Verdichtungsstation 17, die mit einem Bypass-System 20 ausgestattet ist. Eingetragen sind in dem Schema verschiedene mit kennzeichnenden Indizes versehene Drücke ($p_{Index}$) und Druckabfälle ($dp_{Index}$), die für die Steuerung des Betriebs gemäss der Erfindung eine wichtige Rolle spielen. Das Brenngas wird der Verdichterstation 17 mit einem Versorgungsdruck $p_{IN}$ über die Gaszufuhr 19 zugeführt. Das zugeführte Brenngas kann auf zwei Wegen zu einer Heizvorrichtung 22 und von dort über ein Verteilsystem mit entsprechenden Steuerventilen CV1,..,CV3 zur Gasturbine (GT) bzw. deren Brennkammer 12 gelangen: Der erste Weg führt über ein erstes Absperrventil 27, ein Druckreduzierventil 28, einen Verdichter 21, ein Rückschlagventil 29 und ein zweites Absperrventil 30 zu der Heizvorrichtung. Der Druck des Brenngases am Ausgang des Verdichters 21 hat dabei die Grösse $p_{aftGC}$. Über ein zusätzliches Rückführventil 26 kann Brenngas vom Ausgang des Verdichters 21 auf den Eingang der Verdichterstation 17 zurückgeführt werden.

Der zweite Weg führt über das Bypass-System 20, das ein Sicherheitsabschaltventil 23, ein Steuerventil 24 und ein zweites Rückschlagventil 25 aufweist. Das Bypass-System 20 ist mit dem Eingang (19) der Verdichterstation 17 über ein Leitungssystem verbunden, das einen Druckabfall $dp_{befBS}$ verursacht. Am Eingang des Bypass-Systems 20 selbst herrscht der Druck $p_{befBS}$, nach den Ventilen 23 und 24 der Druck $p_{aftBS}$. Der Druckabfall über das nachfolgende, bis zu den Steuerventilen CV1,..,CV3 reichende Teilsystem ist als $dp_{System}$ bezeichnet. Die Drücke des Brenngases vor und hinter den Steuerventilen CV1,..,CV3 sind mit $p_{befCV1,..,3}$ bzw. $p_{aftCV1,..,3}$ bezeichnet, der Druckabfall über den Steuerventilen CV1,..,CV3 mit $dp_{CV1,..,3}$.

Das Brenngas wird der Gasturbine über das Bypass-System 20 zugeführt, sobald der Druck $p_{aftBS}$ hinter dem Steuerventil 24 des Bypass-Systems grösser ist als der Druck $p_{aftGC}$ am Ausgang des Verdichters. Messorte für den Druck sind an der Gaszufuhr 19 angeordnet (gemessen wird $p_{IN}$), am Ausgang des Verdichters 21 (gemessen wird $p_{aftGC}$), vor dem Sicherheitsabschaltventil 23 des Bypass-Systems 20 (gemessen wird $p_{befBS}$), nach dem Steuerventil 24 des Bypass-Systems 20 (gemessen wird $p_{aftBS}$), vor den Steuerventilen CV1,..,CV3 für die Gasturbine (gemessen wird $p_{befCV1,..,3}$) und hinter diesen Steuerventilen (gemessen wird $p_{aftCV1,..,3}$). Zusätzlich ermittelt werden noch die Druckabfälle $dp_{CV1,...,3}$ über diesen Ventilen.

Der aktuelle Wert des Brenngasdrucks $p_{aftCV}$ nach einem Steuerventil CV (es wird zunächst nur der Fall eines Steuerventils CV anstelle der drei Steuerventile CV1,..,CV3 betrachtet) für die Gasturbine spiegelt den für die Gasturbine bei der aktuellen Leistung benötigten Gasdruck wider. Der entsprechend benötigte Minimaldruck vor dem Steuerventil CV kann geschrieben werden als

$$(1) \qquad p_{befCV\_\min} = p_{aftCV} + dp_{CV\_\min},$$

wobei mit $dp_{CV\_min}$ der minimale Druckabfall über dem Steuerventil CV bezeichnet ist, der für einen stabilen Betrieb der Gasturbine notwendig ist. Die Grösse $dp_{C\_min}$ ist für die jeweilige Anlage spezifisch und hängt von der Stabilitätsreserve der Laststeuerung der Gasturbine ab. Sie ändert sich mit der Änderung des Brenngasdrucks $p_{befCV}$ vor dem Steuerventil CV, jedoch kann das Verhältnis $dp_{CV\_min}/ p_{befCV}$ näherungsweise als konstant angenommen werden:

$$(2) \qquad dp_{CV\_\min} / p_{befCV\_\min} = \alpha_{\min} \cong const..$$

Die Gleichung (2) kann wie folgt umgeformt werden:

$$(3) \qquad p_{befCV\_\min} = \frac{1}{1-\alpha_{\min}} p_{aftCV} \cdot$$

Entsprechend wird der Bypassbetrieb dann aufgenommen, wenn der Brenngasdruck vor dem Steuerventil CV der Gasturbine über das Bypass-System 20 höher als der minimal benötigte Druck ist:

$$(4) \qquad p_{befBS} - dp_{BSCV} - dp_{System} \geq p_{befCV\_\min},$$

wobei die beteiligte Drücke bzw. Druckabfälle weiter oben bereits spezifiziert worden und auch in Fig. 2 eingezeichnet sind.

Bisher wurde nur der Fall eines einzigen Steuerventils CV für die Gasturbine GT betrachtet. Wenn mehr als ein Steuerventil CV, beispielsweise die in Fig. 2 eingezeichneten drei Steuerventile CV1, CV2 und CV3, vorhanden sind, und das Brenngas über eine gemeinsame, mit einem Bypass-System ausgestattete Verdichterstation 17 zugeführt wird, muss der Maximalwert der für jedes Steuerventil erforderlichen Minimaldrücke gemäss Gleichung (3) als Kriterium benutzt werden:

$$(5) \qquad p_{befBS} - dp_{BSCV} - dp_{System} \geq \max\{p_{befCV1\_\min}, p_{befCV2\_\min}, ....\}.$$

Falls der Brenngasdruck nach dem Steuerventil CV für die Gasturbine nicht gemessen werden kann, kann Gleichung (3) umgeformt werden:

$$(6) \qquad p_{befCV\_\min} = \frac{1}{1-\alpha_{\min}} (p_{befCV} - dp_{CV}),$$

so dass man mit anderen Messgrössen in das Umschaltkriterium gehen kann. Falls Druckmessungen von $p_{befBS}$ vor dem Sicherheitsabschaltventil 23 des Bypass-Systems 20 nicht möglich sind, kann das Umschaltkriterium (4) wie folgt umgeschrieben werden:

$$(7) \qquad p_{IN} - dp_{befBS} - dp_{BSCV} - dp_{System} \geq p_{befCV\_min}.$$

Der Druckabfall $p_{IN}$ zwischen Gaszufuhr 19 und Eingang des Bypass-Systems 20 kann dabei als konstant oder als Funktion des Versorgungsdruckes $p_{IN}$ angenommen werden.

Die verschiedenen in Fig. 2 eingezeichneten und oben beschriebenen Drücke und Druckdifferenzen werden während des Betriebes mit geeigneten Mitteln, z.B. Druckaufnehmern gemessen und die gemessenen Grössen an die Steuerung 18 weitergeleitet. Die Steuerung wertet die Messdaten fortlaufend aus und gibt entsprechende Befehle an die in der Verdichterstation auf der Verdichterstrecke und im Bypass-System eingesetzten Ventile, um bei den genannten Bedingungen das Brenngas entweder über die Verdichterstrecke oder über das Bypass-System zu den Steuerventilen CV vor der Gasturbine zu bringen.

Insgesamt zeichnet sich das erfindungsgemässe Verfahren durch folgende Charakteristika und Eigenschaften aus:

- Es wird der aktuelle Wert des Brenngasdrucks nach dem Steuerventil CV zur Gasturbine benutzt, um den notwendigen Gasdruck für die gerade abgegebene Leistung unter den gerade herrschenden Umgebungsbedingungen abzudecken.
- Es wird das minimale Verhältnis $\alpha_{min}$ von Druckabfall über dem Steuerventil CV zur Gasturbine zum Druck vor dem Steuerventil verwendet, um den minimalen notwendigen Brenngasdruck für einen stabilen Betrieb der Gasturbine unabhängig vom Druck vor dem Steuerventil zu machen.
- Das Verfahren lässt sich auf mehrere Steuerventile CV erweitern.
- Im Falle von Fehlmessungen kann auf andere Messgrössen ausgewichen werden.

BEZUGSZEICHENLISTE

| | |
|---|---|
| 10 | Gasturbinenanlage |
| 11,21 | Verdichter |
| 12 | Brennkammer |
| 13 | Turbine |
| 14 | Lufteinlass |
| 15 | Abgasauslass |
| 16 | Brennstoffzufuhr |
| 17 | Verdichterstation |
| 18 | Steuerung |
| 19 | Gaszufuhr |
| 20 | Bypass-System |
| 22 | Heizvorrichtung |
| 23 | Sicherheitsabschaltventil (Bypass-System) |
| 24 | Steuerventil (Bypass-System) |
| 25 | Rückschlagventil (Bypass-System) |
| 26 | Rückführventil |
| 27,30 | Absperrventil |
| 28 | Druckreduzierventil |
| 29 | Rückschlagventil |
| CV1,..,CV3 | Steuerventil |
| $p_{IN}$ | Versorgungsdruck |
| $p_{befBS}$ | Druck (vor dem Sicherheitsabschaltventil 23) |
| $p_{aftBS}$ | Druck (nach dem Steuerventil 24) |
| $p_{aftGC}$ | Druck (nach dem Verdichter 21) |
| $p_{befCV1,..,3}$ | Druck (vor dem Steuerventil CV1,..,CV3) |
| $p_{aftCV1,..,3}$ | Druck (nach dem Steuerventil CV1,..,CV3) |

(fortgesetzt)

| $dp_{befBS}$ | Druckabfall (vor dem Bypass-System) |
|---|---|
| $dp_{BSCV}$ | Druckabfall (am Steuerventil 24) |
| $dp_{System}$ | Druckabfall (am System zwischen Steuerventil 24 und Steuerventilen CV1,..CV3) |
| $dp_{CV1,..,3}$ | Druckabfall (am Steuerventil CV1,..,CV3) |

**Patentansprüche**

1. Verfahren zum Betrieb einer Gasturbinenanlage (10), welche über eine Verdichterstation (17) mit einem Brenngas versorgt wird, wobei die Verdichterstation (17) einen Verdichter (21) enthält, der das über eine Gaszufuhr (19) zugeführte Brenngas verdichtet und über wenigstens ein Steuerventil (CV1, CV2, CV3) an eine Brennkammer (12) der Gasturbinenanlage (10) abgibt, und parallel zum Verdichter (21) ein Bypass-System (20) angeordnet ist, über welches umschaltbar Brenngas am Verdichter (21) vorbei zu dem wenigstens einen Steuerventil (CV1, CV2, CV3) geleitet werden kann, **dadurch gekennzeichnet, dass** fortlaufend der Brenngasdruck ($p_{aftCV1}$, $p_{aftCV2}$, $p_{aftCV3}$) am Ausgang des wenigstens einen Steuerventils (CV1, CV2, CV3) gemessen wird, dass aus den gemessenen Druckwerten jeweils ein für den Betrieb der Gasturbine notwendiger minimaler Brenngasdruck ($p_{befCV1\_min}$, $p_{befCV2\_min}$, $p_{befCV3\_min}$,) am Eingang des wenigstens einen Steuerventils (CV1, CV2, CV3) bestimmt wird, und dass die Verdichterstation (17) auf den Bypassbetrieb umgeschaltet wird, wenn der über das Bypass-System auf den Eingang des wenigstens einen Steuerventils (CV1, CV2, CV3) gelangende Brenngasdruck ($p_{befBS}$ - $dp_{BSCV}$ - $dp_{System}$) grösser oder gleich dem notwendigen minimalen Brenngasdruck ($p_{befCV1\_min}$, $p_{befCV2\_min}$, $p_{befCV3-min}$,) ist.

2. Verfahren nach Anspruch 1, **dadurch gekennzeichnet, dass** der Verdichter (21) das Brenngas zu mehreren parallel liegenden Steuerventilen (CV1, CV2, CV3) leitet, dass fortlaufend der Brenngasdruck ($p_{aftCV1}$, $p_{aftCV2}$, $p_{aftCV3}$) am Ausgang jedes der Steuerventile (CV1, CV2, CV3) gemessen wird, dass aus den gemessenen Druckwerten für jedes der Steuerventile (CV1, CV2, CV3) jeweils ein für den Betrieb der Gasturbine notwendiger minimaler Brenngasdruck ($p_{befCV1\_min}$, $p_{befCV2\_min}$, $p_{befCV3\_min}$,) am Eingang des entsprechenden Steuerventils (CV1, CV2, CV3) bestimmt wird, und dass die Verdichterstation (17) auf den Bypassbetrieb umgeschaltet wird, wenn der über das Bypass-System auf die Eingänge der Steuerventile (CV1, CV2, CV3) gelangende Brenngasdruck ($p_{befBS}$ - $dp_{BSCV}$ - $dp_{System}$) grösser oder gleich dem Maximum der notwendigen minimalen Brenngasdrücke (max {$p_{befCV1\_min}$, $p_{befCV2\_min}$, $p_{befCV3\_min}$}) aller Steuerventile (CV1, CV2, CV3) ist.

3. Verfahren nach Anspruch 1 oder 2, **dadurch gekennzeichnet, dass** der für den Btrieb der Gasturbine notwendige minimale Brenngasdruck ($p_{befCV1\_min}$, $p_{befCV2\_min}$, $p_{befCV3\_min}$,) jeweils durch Multiplikation des Brenngasdrucks ($p_{aftCV1}$, $p_{aftCV2}$, $p_{aftCV3}$) am Ausgang des wenigstens einen Steuerventils (CV1, CV2, CV3) mit einem Faktor

$$(\frac{1}{1-\alpha_{min}})$$ bestimmt wird.

4. Verfahren nach Anspruch 3, **dadurch gekennzeichnet, dass** der Faktor durch das konstante Verhältnis ($\alpha_{min}$) von minimalem Druckabfall ($dp_{CV\_min}$) über dem Steuerventil (CV) zum Brenngasdruck ($p_{befCV}$) am Eingang des Steuerventils (CV) bestimmt ist.

5. Verfahren nach einem der Ansprüche 1 bis 4, **dadurch gekennzeichnet, dass** zur Bestimmung des auf den Eingang des wenigstens einen Steuerventils (CV1, CV2, CV3) gelangenden Brenngasdrucks ($p_{befBS}$ - $dp_{BSCV}$ - $dp_{System}$) die Differenz aus dem Versorgungsdruck ($p_{IN}$) am Eingang der Verdichterstation (17) und dem Druckabfall ($dp_{befBS}$) zwischen dem Eingang und dem Bypass-System herangezogen wird.

6. Verfahren zum Betrieb einer Gasturbinenanlage (10), welche über eine Verdichterstation (17) mit einem Brenngas versorgt wird, wobei die Verdichterstation (17) einen Verdichter (21) enthält, der das über eine Gaszufuhr (19) zugeführte Brenngas verdichtet und über wenigstens ein Steuerventil (CV1, CV2, CV3) an eine Brennkammer (12) der Gasturbinenanlage (10) abgibt, und parallel zum Verdichter (21) ein Bypass-System (20) angeordnet ist, über welches umschaltbar Brenngas am Verdichter (21) vorbei zu dem wenigstens einen Steuerventil (CV1, CV2, CV3) geleitet werden kann, **dadurch gekennzeichnet, dass** fortlaufend der Brenngasdruck ($p_{aftCV1}$, $p_{aftCV2}$, $p_{aftCV3}$) am Ausgang des wenigstens einen Steuerventils (CV1, CV2, CV3) als Differenz aus dem Brenngasdruck ($p_{befCV1}$, $p_{befCV2}$, $p_{befCV3}$,) am Eingang des Steuerventils (CV1, CV2, CV3) und dem Druckabfall ($dp_{CV1}$, $dp_{CV2}$, $dp_{CV3}$) am Steuerventil (CV1, CV2, CV3) bestimmt wird, dass aus den bestimmten Druckwerten jeweils ein für den Betrieb der Gasturbine notwendiger minimaler Brenngasdruck ($p_{befCV1\_min}$, $p_{befCV2\_min}$, $p_{befCV3\_min}$,) am Eingang des wenigstens einen Steuerventils (CV1, CV2, CV3) bestimmt wird, und dass die Verdichterstation (17) auf den Bypassbetrieb umgeschaltet wird, wenn der über das Bypass-System auf den Eingang des wenigstens einen Steuerventils (CV1, CV2, CV3) gelangende Brenngasdruck ($p_{befBS}$ - $dp_{BSCV}$ - $dp_{System}$) grösser oder gleich dem notwendigen minimalen Brenngasdruck ($p_{befCV1\_min}$, $p_{befCV2\_min}$, $p_{befCV3\_min}$,) ist.

7. Verfahren nach Anspruch 6, **dadurch gekennzeichnet, dass** der Verdichter (21) das Brenngas zu mehreren parallel liegenden Steuerventilen (CV1, CV2, CV3) leitet, dass fortlaufend der Brenngasdruck ($p_{aftCV1}$, $p_{aftCV2}$, $p_{aftCV3}$) am Ausgang jedes der Steuerventile (CV1, CV2, CV3) als Differenz aus dem Brenngasdruck ($p_{befCV1}$, $p_{befCV2}$, $p_{befCV3}$,) am Eingang jedes Steuerventils (CV1, CV2, CV3) und dem Druckabfall ($dp_{CV1}$, $dp_{CV2}$, $dp_{CV3}$) am zugehörigen Steuerventil (CV1, CV2, CV3) bestimmt wird, dass aus den gemessenen Druckwerten für jedes der Steuerventile (CV1, CV2, CV3) jeweils ein für den Betrieb der Gasturbine notwendiger minimaler Brenngasdruck ($p_{befCV1-min}$, $p_{befCV2\_min}$, $p_{befCV3\_min}$,) am Eingang des entsprechenden Steuerventils (CV1, CV2, CV3) bestimmt wird, und dass die Verdichterstation (17) auf den Bypassbetrieb umgeschaltet wird, wenn der über das Bypass-System auf die Eingänge der Steuerventile (CV1, CV2, CV3) gelangende Brenngasdruck ($p_{befBS}$ - $dp_{BSCV}$ - $dp_{System}$) grösser oder gleich dem Maximum der notwendigen minimalen Brenngasdrücke (max {$p_{befCV1\_min}$, $p_{befCV2\_min}$, $p_{befCV3\_min}$}) aller Steuerventile (CV1, CV2, CV3) ist.

8. Verfahren nach Anspruch 6 oder 7, **dadurch gekennzeichnet, dass** der für den Betrieb der Gasturbine notwendige minimale Brenngasdruck ($p_{befCV1-min}$, $p_{befCV2\_min}$, $p_{befCV3\_min}$,) jeweils durch Multiplikation des Brenngasdrucks ($p_{aftCV1}$, $p_{aftCV2}$, $p_{aftCV3}$) am Ausgang des wenigstens einen Steuerventils (CV1, CV2, CV3) mit einem Faktor bestimmt wird.

9. Verfahren nach Anspruch 8, **dadurch gekennzeichnet, dass** der Faktor durch das konstante Verhältnis ($\alpha_{min}$) von minimalem Druckabfall ($dp_{cv\_min}$) über dem Steuerventil (CV) zum Brenngasdruck ($p_{befCV}$) am Eingang des Steuerventils (CV) bestimmt ist.

10. Verfahren nach einem der Ansprüche 6 bis 9, **dadurch gekennzeichnet, dass** zur Bestimmung des auf den Eingang des wenigstens einen Steuerventils (CV1, CV2, CV3) gelangenden Brenngasdrucks ($p_{befBs}$ - $dp_{BSCV}$ - $dp_{System}$) die Differenz aus dem Versorgungsdruck ($p_{IN}$) am Eingang der Verdichterstation (17) und dem Druckabfall ($dp_{befBS}$) zwischen dem Eingang und dem Bypass-System herangezogen wird.

**Claims**

1. A method for operating a gas turbine plant (10), which is supplied with a combustible gas via a compressor station (17), wherein the compressor station (17) comprises a compressor (21), which compresses the combustible gas supplied via a gas feed (19) and via at least one control valve (CV1, CV2, CV3) discharges the combustible gas to a combustion chamber (12) of the gas turbine plant (10), and a bypass system (20) is arranged parallel to the compressor (21), via which combustible gas can be directed in a switchable manner past the compressor (21) to the at least one control valve (CV1, CV2, CV3), **characterized in that** the combustible gas pressure ($p_{aftCV1}$, $p_{aftCV2}$, $p_{aftCV3}$) at the outlet of the at least one control valve (CV1, CV2, CV3) is continuously measured, **in that** from the measured pressure values a minimum combustible gas pressure ($p_{befCV1\_min}$, $p_{befCV2\_min}$, $p_{befCV3\_min}$)- which is required for the operation of the gas turbine - at the inlet of the at least one control valve (CV1, CV2, CV3) is determined in each case, and **in that** the compressor station (17) is switched to bypass operation if the combustible gas pressure ($p_{befBS}$-$dp_{BSCV}$-$dp_{System}$) reaching the inlet of the at least one control valve (CV1, CV2, CV3), via the bypass system, is greater than or equal to the necessary minimum combustible gas pressure ($p_{befCV1\_min}$, $p_{befCV2\_min}$, $p_{befCV3\_min}$).

2. The method as claimed in claim 1, **characterized in that** the compressor (21) directs the combustible gas to a plurality of control valves (CV1, CV2, CV3) arranged in parallel, **in that** the combustible gas pressure ($P_{aftCV1}$, $P_{aftCV2}$, $P_{aftCV3}$) at the outlet of each of the control valves (CV1, CV2, CV3) is continuously measured, **in that** from the measured pressure values for each of the control valves (CV1, CV2, CV3) a minimum combustible gas pressure ($p_{befCV1-min}$, $p_{befCV2\_min}$, $p_{befCV3\_min}$) - which is required for the operation of the gas turbine - at the inlet of the corresponding control valve (CV1, CV2, CV3) is determined in each case, and **in that** the compressor station (17) is switched to bypass operation if the combustible gas pressure ($p_{befBS}$-$dp_{BSCV}$-$dp_{System}$) reaching the inlets of the control valves (CV1, CV2, CV3), via the bypass system, is greater than or equal to the maximum of the required minimum combustible gas pressures ($\max\{p_{befCV1\_min}, p_{befCV2\_min}, p_{befCV3\_min}\}$) of all the control valves (CV1, CV2, CV3).

3. The method as claimed in claim 1 or 2, **characterized in that** the minimum combustible gas pressure ($p_{befCV1\_min}$, $p_{befCV2\_min}$, $p_{befCV3\_min}$), which is required for the operation of the gas turbine, is determined in each case by multiplication of the combustible gas pressure ($p_{aftCV1}$, $P_{aftCV2}$, $P_{aftCV3}$) at the outlet of the at least one control valve (CV1, CV2, CV3) by a factor of $\left( \dfrac{1}{1-\alpha_{min}} \right)$.

4. The method as claimed in claim 3, **characterized in that** the factor is determined by the constant ratio ($\alpha_{min}$) of the minimum pressure drop ($dp_{CV\_min}$) across the control valve (CV) to the combustible gas pressure ($P_{befCV}$) at the inlet of the control valve (CV).

5. The method according to one of Claims 1 to 4, **characterized in that** for determining the combustible gas pressure ($p_{befBS}$-$dp_{BSCV}$-$dp_{System}$) reaching the inlet of the at least one control valve (CV1, CV2, CV3), the difference calculated from the supply pressure ($p_{IN}$) at the inlet of the compressor station (17) and the pressure drop ($dp_{befBS}$) between the inlet and the bypass system is used.

6. A method for operating a gas turbine plant (10), which is supplied with a combustible gas via a compressor station (17), wherein the compressor station (17) comprises a compressor (21), which compresses the combustible gas supplied via a gas feed (19) and via at least one control valve (CV1, CV2, CV3) discharges the combustible gas to a combustion chamber (12) of the gas turbine plant (10), and a bypass system (20) is arranged parallel to the compressor (21), via which combustible gas can be directed in a switchable manner past the compressor (21) to the at least one control valve (CV1, CV2, CV3), **characterized in that** the combustible gas pressure ($p_{aftCV1}$, $P_{aftCV2}$, $P_{aftCV3}$) at the outlet of the at least one control valve (CV1, CV2, CV3) is continuously determined as the difference calculated from the combustible gas pressure ($p_{befCV1}$, $p_{befCV2}$, $P_{befCV3}$) at the inlet of the control valve (CV1, CV2, CV3) and the pressure drop ($dp_{CV1}$, $dp_{CV2}$, $dp_{CV3}$) at the control valve (CV1, CV2, CV3), **in that** from the determined pressure values, a minimum combustible gas pressure ($p_{befCV1\_min}$, $p_{befCV2\_min}$, $p_{befCV3\_min}$) - which is required for the operation of the gas turbine - at the inlet of the at least one control valve (CV1, CV2, CV3) is determined in each case, and **in that** the compressor station (17) is switched to bypass operation if the combustible gas pressure ($p_{befBS}$-$dp_{BSCV}$-$dp_{System}$) reaching the inlet of the at least one control valve (CV1, CV2, CV3), via the bypass system, is greater than or equal to the required minimum combustible gas pressure ($p_{befCV1\_min}$, $p_{befCV2\_min}$, $p_{befCV3\_min}$).

7. The method as claimed in claim 6, **characterized in that** the compressor (21) directs the combustible gas to a plurality of control valves (CV1, CV2, CV3) arranged in parallel, **in that** the combustible gas pressure ($P_{aftCV1}$, $P_{aftCV2}$, $P_{aftCV3}$) at the outlet of each of the control valves (CV1, CV2, CV3) is continuously determined as the difference calculated from the combustible gas pressure ($p_{befCV1}$, $P_{befCV2}$, $P_{befCV3}$) at the inlet of each control valve (CV1, CV2, CV3) and the pressure drop ($dp_{CV1}$, $dp_{CV2}$, $dp_{CV3}$) at the associated control valve (CV1, CV2, CV3), **in that** from the measured pressure values for each of the control valves (CV1, CV2, CV3), a minimum combustible gas pressure ($p_{befCV1\_min}$, $p_{befCV2\_min}$, $p_{befCV3\_min}$) - which is required for the operation of the gas turbine - at the inlet of the corresponding control valve (CV1, CV2, CV3) is determined in each case, and **in that** the compressor station (17) is switched to bypass operation if the combustible gas pressure ($p_{befBS}$-$dp_{BSCV}$-$dp_{System}$) reaching the inlets of the control valves (CV1, CV2, CV3), via the bypass system, is greater than or equal to the maximum of the required minimum combustible gas pressures ($\max\{p_{befCV1\_min}, p_{befCV2\_min}, p_{befCV3\_min}\}$) Of all the control valves (CV1, CV2, CV3).

8. The method as claimed in claim 6 or 7, **characterized in that** the minimum combustible gas pressure ($p_{befCV1\_min}$, $p_{befCV2\_min}$, $p_{befCV3\_min}$), which is required for the operation of the gas turbine, is determined in each case by multiplication of the combustible gas pressure ($p_{aftCV1}$, $p_{aftCV2}$, $p_{aftCV3}$) at the outlet of the at least one control valve (CV1, CV2, CV3) by a factor of

9. The method as claimed in claim 8, **characterized in that** the factor is determined by the constant ratio ($\alpha_{min}$) of the minimum pressure drop ($dp_{CV\_min}$) across the control valve (CV) to the combustible gas pressure ($P_{befCV}$) at the inlet of the control valve (CV).

10. The method according to one of Claims 6 to 9, **characterized in that** for determining the combustible gas pressure

($p_{befBS}$-$dp_{BSCV}$-$dp_{System}$) reaching the inlet of the at least one control valve (CV1, CV2, CV3), the difference calculated from the supply pressure ($p_{IN}$) at the inlet of the compressor station (17) and the pressure drop ($dp_{befBS}$) between the inlet and the bypass system is used.

## Revendications

1. Procédé de conduite d'une installation (10) de turbine à gaz alimentée en gaz combustible par un poste de compression (17),
   le poste de compression (17) comprenant un compresseur (21) qui comprime le gaz apporté par une amenée de gaz (19) et le délivre par au moins une soupape de commande (CV1, CV2, CV3) à une chambre de combustion (12) de l'installation (10) de turbine à gaz,
   un système de dérivation (20) par lequel du gaz combustible peut être apporté de manière commutable et en contournant le compresseur (21) vers la ou les soupapes de commande (CV1, CV2, CV3) étant disposé parallèlement au compresseur (21),
   **caractérisé en ce que**
   la pression ($p_{aftCV1}$, $p_{aftCV2}$, $p_{aftCV3}$) du gaz combustible à la sortie de la ou des soupapes de commande (CV1, CV2, CV3) est mesurée en continu,
   **en ce qu'**à partir des valeurs de pression mesurées, une pression minimale ($p_{befCV1\_min}$, $p_{befCV2\_min}$, $p_{befCV3\_min}$) nécessaire pour le fonctionnement de la turbine à gaz est déterminée à l'entrée de la ou des soupapes de commande (CV1, CV2, CV3) et
   **en ce que** le poste de compression (17) est basculé en mode de dérivation si la pression ($p_{befBS}$ - $dp_{BSCV}$ - $dp_{System}$) du gaz combustible arrivant à l'entrée de la ou des soupapes de commande (CV1, CV2, CV3) est supérieure ou égale à la pression minimale nécessaire ($p_{befCV1-min}$, $p_{befCV2\_min}$, $p_{befCV3\_min}$) du gaz combustible.

2. Procédé selon la revendication 1, **caractérisé en ce que** le compresseur (21) conduit le gaz combustible vers plusieurs soupapes de commande (CV1, CV2, CV3) disposées en parallèle, **en ce que** la pression ($p_{aftCV1}$, $p_{aftCV2}$, $p_{aftCV3}$) du gaz combustible à la sortie de chacune des soupapes de commande (CV1, CV2, CV3) est mesurée en permanence, **en ce qu'**à partir des valeurs de pression mesurées pour chacune des soupapes de commande (CV1, CV2, CV3), une pression minimale ($p_{befCV1\_min}$, $p_{befCV2\_min}$, $p_{befCV3\_min}$) nécessaire pour le fonctionnement de la turbine à gaz à l'entrée de la soupape de commande (CV1, CV2, CV3) concernée est déterminée et **en ce que** le poste de compression (17) est commuté en mode de dérivation si la pression ($p_{befBS}$ - $dp_{BSCV}$ - $dp_{System}$) du gaz combustible qui arrive aux entrées des soupapes de commande (CV1, CV2, CV3) est supérieure ou égale au maximum des pressions minimales nécessaires ($\max\{p_{befCV1\_min}, p_{befCV2\_min}, p_{befCV3\_min}\}$) du gaz combustible sur toutes les soupapes de commande (CV1, CV2, CV3).

3. Procédé selon les revendications 1 ou 2, **caractérisé en ce que** la pression minimale ($p_{befCV1\_min}$, $p_{befCV2\_min}$, $p_{befCV3\_min}$) nécessaire pour le fonctionnement de la turbine à gaz est déterminée en multipliant par un facteur ($1/(1-\alpha_{min})$) la pression ($p_{aftCV1}$, $p_{aftCV2}$, $p_{aftCV3}$) du gaz combustible à la sortie de la ou des soupapes de commande (CV1, CV2, CV3).

4. Procédé selon la revendication 3, **caractérisé en ce que** le facteur est déterminé par le rapport constant ($\alpha_{min}$) entre la perte de charge minimale ($dp_{CV\_min}$) à travers la soupape de commande (CV) et la pression ($P_{befCV}$) du gaz combustible à l'entrée de la soupape de commande (CV).

5. Procédé selon l'une des revendications 1 à 4, **caractérisé en ce que** pour déterminer la pression ($p_{befBS}$ - $dp_{BSCV}$ - $dp_{System}$) du gaz combustible à l'entrée de la ou des soupapes de commande (CV1, CV2, CV3), on fait intervenir la différence entre la pression d'alimentation ($p_{IN}$) à l'entrée du poste de compression (17) et la perte de charge ($dp_{befBS}$) entre l'entrée et le système de dérivation.

6. Procédé de conduite d'une installation (10) de turbine à gaz alimentée en gaz combustible par un poste de compression (17),
   le poste de compression (17) comprenant un compresseur (21) qui comprime le gaz apporté par une amenée de gaz (19) et le délivre par au moins une soupape de commande (CV1, CV2, CV3) à une chambre de combustion (12) de l'installation (10) de turbine à gaz,
   un système de dérivation (20) par lequel du gaz combustible peut être apporté de manière commutable et en contournant le compresseur (21) vers la ou les soupapes de commande (CV1, CV2, CV3) étant disposé parallèlement au compresseur (21),

**caractérisé en ce que**
la pression ($p_{aftCV1}$, $p_{aftCV2}$, $p_{aftCV3}$) du gaz combustible à la sortie de la ou des soupapes de commande (CV1, CV2, CV3) est déterminée en continu en tant que différence entre la pression ($p_{befCV1}$, $P_{befCV2}$, $P_{befCV3}$) du gaz combustible à l'entrée de la soupape de commande (CV1, CV2, CV3) et la perte de charge ($dp_{CV1}$, $dp_{CV2}$, $dp_{CV3}$) à travers la soupape de commande (CV1, CV2, CV3),
**en ce qu'**à partir des valeurs de pression définies, une pression minimale ($p_{befCV1\_min}$, $p_{befCV2\_min}$, $p_{befCV3\_min}$) nécessaire pour le fonctionnement de la turbine à gaz est déterminée à l'entrée de la ou des soupapes de commande (CV1, CV2, CV3) et
**en ce que** le poste de compression (17) est basculé en mode de dérivation si la pression ($p_{befBS}$ - $dp_{BSCV}$ - $dp_{System}$) du gaz combustible arrivant à l'entrée de la ou des soupapes de commande (CV1, CV2, CV3) est supérieure ou égale à la pression minimale nécessaire ($p_{befCV1\_min}$, $p_{befCV2\_min}$, $p_{befCV3\_min}$) du gaz combustible.

7. Procédé selon la revendication 6, **caractérisé en ce que** le compresseur (21) conduit le gaz combustible vers plusieurs soupapes de commande (CV1, CV2, CV3) disposées en parallèle, **en ce que** la pression ($p_{aftCV1}$, $p_{aftCV2}$, $p_{aftCV3}$) du gaz combustible à la sortie de chacune des soupapes de commande (CV1, CV2, CV3) est déterminée en permanence en tant que différence entre la pression ($p_{befCV1}$, $p_{befCV2}$, $P_{befCV3}$) du gaz combustible à l'entrée de chaque soupape de commande (CV1, CV2, CV3) et la perte de charge ($dp_{CV1}$, $dp_{CV2}$, $dp_{CV3}$) à travers la soupape de commande (CV1, CV2, CV3) associée, **en ce qu'**à partir des valeurs de pression mesurées pour chacune des soupapes de commande (CV1, CV2, CV3), une pression minimale ($p_{befCV1\_min}$, $p_{befCV2\_min}$, $p_{befCV3\_min}$) nécessaire pour le fonctionnement de la turbine à gaz est déterminée à l'entrée de la ou des soupapes de commande (CV1, CV2, CV.3) et **en ce que** le poste de compression (17) est commuté en mode de dérivation si la pression ($p_{befBS}$ - $dp_{BSCV}$ - $dp_{System}$) du gaz combustible qui arrive aux entrées des soupapes de commande (CV1, CV2, CV3) est supérieure ou égale au maximum des pressions minimales nécessaires ($\max \{p_{befCV1\_min}, p_{befCV2\_min}, p_{befCV3\_min}\}$) du gaz combustible sur toutes les soupapes de commande (CV1, CV2, CV3).

8. Procédé selon les revendications 6 ou 7, **caractérisé en ce que** la pression minimale ($p_{befCV1-min}$, $p_{befCV2\_min}$, $p_{befCV3\_min}$) nécessaire pour le fonctionnement de la turbine à gaz est déterminée en multipliant par un facteur ($1/(1-\alpha_{min})$) la pression ($p_{aftCV1}$, $p_{aftCV2}$, $p_{aftCV3}$) du gaz combustible à la sortie de la ou des soupapes de commande (CV1, CV2, CV3).

9. Procédé selon la revendication 8, **caractérisé en ce que** le facteur est déterminé par le rapport constant ($\alpha_{min}$) entre la perte de charge minimale ($dp_{cv\_min}$) à travers la soupape de commande (CV) et la pression ($P_{befCV}$) du gaz combustible à l'entrée de la soupape de commande (CV).

10. Procédé selon l'une des revendications 6 à 9, **caractérisé en ce que** pour déterminer la pression ($p_{befBS}$ - $dp_{BSCV}$ - $dp_{System}$) du gaz combustible à l'entrée de la ou des soupapes de commande (CV1, CV2, CV3), on fait intervenir la différence entre la pression d'alimentation ($p_{IN}$) à l'entrée du poste de compression (17) et la perte de charge ($dp_{befBS}$) entre l'entrée et le système de dérivation.

*Fig.1*

**Fig.2**

EP 2 251 534 B1

**IN DER BESCHREIBUNG AUFGEFÜHRTE DOKUMENTE**

**In der Beschreibung aufgeführte Patentdokumente**

- DE 102007007888 A1
- EP 1635066 A2